# EUROPEAN PATENT APPLICATION

(11) **EP 4 293 293 A1**
(43) Date of publication of application: **20.12.2023**
(21) Application number: 21925629.4
(22) Date of filing: 10.02.2021
(51) Int. Cl.: F24F 7/08, F24F 13/22

(54) **HEAT EXCHANGE VENTILATOR**

(71) Applicant: MITSUBISHI ELECTRIC CORPORATION, Chiyoda-ku Tokyo 100-8310 (JP)
(72) Inventor: OKEYA, Kenta, Tokyo 100-8310 (JP); TAKATSU, Ryo, Tokyo 100-8310 (JP); DOI, Atsuo, Tokyo 100-8310 (JP); ISHIBASHI, Ryohei, Tokyo 100-8310 (JP); HASEGAWA, Kohei, Tokyo 100-8310 (JP)
(74) Representative: Mewburn Ellis LLP
(86) International application number: PCT/JP2021/005075
(87) International publication number: WO 2022/172376

(57) **Abstract**

A heat exchange ventilator (10) includes: a housing (1) including a supply air path and an exhaust air path independent of the supply air path; a supply air blower (11) that is installed in a supply air path and generates a supply air flow in the supply air path; an exhaust air blower (12) that is installed in the exhaust air path and generates an exhaust air flow in the exhaust air path; a heat exchanger (2) that causes the supply air path and the exhaust air path to cross each other and causes heat exchange between the supply air flow and the exhaust air flow; a supply-air-side drain pan (20a) installed downstream of the heat exchanger (2) in the supply air path; and an exhaust-air-side drain pan (20b) installed downstream of the heat exchanger (2) in the exhaust air path. Each of the supply-air-side drain pan (20a) and the exhaust-air-side drain pan (20b) includes a backflow prevention valve (22), and a supply-air-side drain discharge port (21a) or an exhaust-air-side drain discharge port (21b) for discharge of dew condensation water generated in the housing (1) to outside.

## Description

### Field

The present disclosure relates to a heat exchange ventilator that performs heat exchange between a supply air flow and an exhaust air flow via a heat exchanger while performing simultaneous supply/exhaust ventilation.

### Background

A heat exchange ventilator includes: a supply air path that supplies air by allowing outside air to receive indoor thermal energy and bringing the outside air close to an indoor temperature and humidity; and an exhaust air path that exhausts air by applying indoor thermal energy to outside air. The supply air path and the exhaust air path cross each other in a heat exchanger in the heat exchange ventilator, and exchange thermal energy between supply air and exhaust air. The heat exchanger needs to be inserted into and removed from a main body at the time of manufacturing or maintenance after installation, and the heat exchanger is made slidable mainly in a direction orthogonal to the air path by being held by a heat exchanger frame and a guide rail.

Since a contact portion between the heat exchanger frame and the guide rail is a boundary surface that separates the supply air path and the exhaust air path, the presence of a gap between the heat exchanger frame and the guide rail becomes a factor to decrease airtightness.

Therefore, improvement for reducing an amount of air leakage between the supply air path and the exhaust air path has been made.

As the amount of air leakage from the gap between the supply air path and the exhaust air path is reduced, a transition of odor from an exhaust air flow to a supply air flow through a total heat exchanger has become a new problem next. The total heat exchanger can simultaneously exchange heat and humidity between the supply air flow and the exhaust air flow, and greatly contributes to reduction of an air conditioning load. However, an odor component is dissolved in moisture when humidity exchange is performed, and the odor moves together with humidity when the dissolved odor component moves from one of the supply air flow or the exhaust air flow to another.

As a countermeasure against this new problem, there is a method of using a sensible heat exchanger for heat exchange ventilation in a place where an odor is concerned. However, when the sensible heat exchanger is used, under a condition where a difference between indoor and outdoor temperatures is large, such as summer or winter, dew condensation is likely to occur due to warm air cooled by cold air in the heat exchanger portion. Since dew condensation occurs on both the supply air flow side and the exhaust air flow side due to a change in air conditions of outside air and the inside of the room, it is originally necessary to provide drain pans on both the supply air flow side and the exhaust air flow side.

Patent Literature 1 discloses a heat exchanger ventilation device including a drain pan that receives condensation from a heat exchanger in a lower portion of the heat exchanger. The heat exchanger ventilation device disclosed in Patent Literature 1 includes an exhaust-side drain pan, a supply-side drain pan, and a water channel that connects the supply-side drain pan and the exhaust-side drain pan. The exhaust-side drain pan includes a drain outlet that drains condensation water generated in the heat exchanger to the outside.

### Citation List

### Patent Literature

Patent Literature 1: International Publication No. 2017/141443

### Summary

### Technical Problem

The heat exchanger ventilation device disclosed in Patent Literature 1 has a structure in which the supply-side drain pan and the exhaust-side drain pan are installed, there is the water channel connecting the supply-side drain pan and the exhaust-side drain pan, and condensation water generated from the heat exchanger is drained only through the drain outlet provided in the exhaust-side drain pan. Therefore, in a case of an air condition where condensation is generated on the supply-side of the heat exchanger, air blowing performance of a supply air blower and an exhaust air blower is unbalanced, negative pressure in an air supply channel increases when supply air blower performance is higher than exhaust air blower performance, and the air flows backward from an air exhaust channel to the air supply channel through the water channel connecting the supply-side drain pan and the exhaust-side drain pan.

In addition, the heat exchanger ventilation device disclosed in Patent Literature 1 cannot solve the problem that air flows backward from the air exhaust channel to the air supply channel under a use condition where no condensation water is generated in the heat exchanger.

When the exhaust air flows backward from the air exhaust channel to the air supply channel, contaminated air in the room flows into supply air, and an introduction amount of fresh outside air decreases, which is not preferable in maintaining a comfortable indoor environment.

The present disclosure has been made in view of the above, and an object is to obtain a heat exchange ventilator capable of preventing exhaust air from flowing into a supply air path even under an air condition where dew condensation water is generated on a supply air side of a heat exchanger and an air condition where dew condensation water is not generated in the heat exchanger.

### Solution to Problem

To solve the above problems and achieve the object a heat exchange ventilator according to the present disclosure includes: a housing including a supply air path and an exhaust air path being independent of the supply air path; a supply air blower adapted to generate a supply air flow in the supply air path, the supply air blower being installed in the supply air path; an exhaust air blower adapted to generate an exhaust air flow in the exhaust air path, the exhaust air blower being installed in the exhaust air path; a heat exchanger adapted to cause the supply air path and the exhaust air path to cross each other and cause heat exchange between the supply air flow and the exhaust air flow; a supply-air-side drain pan installed downstream of the heat exchanger in the supply air path; and an exhaust-air-side drain pan installed downstream of the heat exchanger in the exhaust air path. Each of the supply-air-side drain pan and the exhaust-air-side drain pan includes a backflow prevention valve and a drain discharge port adapted to discharge dew condensation water generated in the housing to outside.

### Advantageous Effects of Invention

The heat exchange ventilator according to the present disclosure has an effect of preventing exhaust air from flowing into a supply air path even under an air condition where dew condensation water is generated on a supply air side of a heat exchanger and an air condition where dew condensation water is not generated in the heat exchanger.

### Brief Description of Drawings

FIG. 1 is a schematic configuration view of a heat exchange ventilator according to a first embodiment.
FIG. 2 is a perspective view of a drain pan of the heat exchange ventilator according to the first embodiment.
FIG. 3 is a perspective view of a drain member of the heat exchange ventilator according to the first embodiment.
FIG. 4 is a side view of a backflow prevention valve of the heat exchange ventilator according to the first embodiment.
FIG. 5 is a bottom view of the backflow prevention valve of the heat exchange ventilator according to the first embodiment.

### Description of Embodiments

Hereinafter, a heat exchange ventilator according to an embodiment will be described in detail with reference to the drawings.

### First Embodiment.

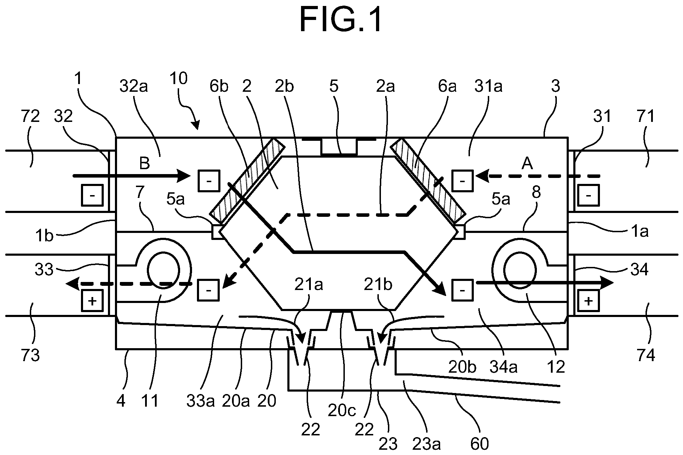

FIG. 1 is a schematic configuration view of a heat exchange ventilator according to a first embodiment. A heat exchange ventilator 10 is a device that is attached to a space in an attic and ventilates inside of a room by supply and exhaust of air through connected ducts. The heat exchange ventilator 10 includes a housing 1 that is a hexahedral box forming an outer frame. The housing 1 includes an outdoor-side side surface 1a and an indoor-side side surface 1b. The outdoor-side side surface 1a and the indoor-side side surface 1b are two side surfaces facing each other. The outdoor-side side surface 1a is provided with an outdoor-side suction port 31 through which outdoor air is suctioned, and the indoor-side side surface 1b is provided with an indoor-side blow-out port 33 through which outdoor air suctioned from the outdoor-side suction port 31 is supplied into the room. Further, the indoor-side side surface 1b is provided with an indoor-side suction port 32 through which indoor air is suctioned, and the outdoor-side side surface 1a is provided with an outdoor-side exhaust port 34 through which indoor air suctioned through the indoor-side suction port 32 is discharged outside the room.

The outdoor-side suction port 31 is connected with an outside air duct 71 leading to the outside of the room. The indoor-side suction port 32 is connected with a return air duct 72 leading to the inside of the room. The indoor-side blow-out port 33 is connected with an air supply duct 73 leading to the inside of the room. The outdoor-side exhaust port 34 is connected with an air exhaust duct 74 leading to the outside of the room.

Inside the housing 1, a supply air path connecting the outdoor-side suction port 31 and the indoor-side blow-out port 33 and an exhaust air path connecting the indoor-side suction port 32 and the outdoor-side exhaust port 34 are formed. The supply air path and the exhaust air path are air paths independent from each other.

Further, the heat exchange ventilator 10 includes a supply air blower 11 and an exhaust air blower 12. The supply air blower 11 is disposed in the supply air path, and forms a supply air flow in the supply air path. The exhaust air blower 12 is installed in the exhaust air path, and forms an exhaust air flow in the exhaust air path. Note that, in FIG. 1, the supply air flow is indicated by a broken line arrow A, and the exhaust air flow is indicated by a solid line arrow B.

Further, the heat exchange ventilator 10 includes a heat exchanger 2. The heat exchanger 2 is disposed so as to be positioned on a way of the supply air path and on a way of the exhaust air path, and causes sensible heat exchange between the supply air flow passing through the supply air path and the exhaust air flow passing through the exhaust air path.

The heat exchanger 2 has a hexagonal column shape, and is disposed substantially at a center of the housing 1 in front view. In the heat exchanger 2, two pairs among pairs of two sides facing each other in the hexagonal cross section have equal lengths, and a remaining pair is longer than the other two pairs. Hereinafter, among pairs of two sides facing each other in the hexagonal cross section of the heat exchanger 2, a longer one is referred to as a long side, and a shorter one is referred to as a short side. The heat exchanger 2 is disposed such that two long sides of the hexagon are in a horizontal direction in front view. The heat exchanger 2 includes a heat exchanger supply air path 2a through which the supply air flow passes and a heat exchanger exhaust air path 2b through which the exhaust air flow passes. The heat exchanger supply air path 2a and the heat exchanger exhaust air path 2b face each other in a central portion of the heat exchanger 2 in front view, as the air paths independent from each other. That is, the heat exchanger 2 causes the supply air path and the exhaust air path to face each other, and causes heat exchange between the supply air flow and the exhaust air flow.

The heat exchanger 2 includes: inflow surfaces into which air flows; outflow surfaces from which air flows out; and shielding surfaces that connect the inflow surfaces and the outflow surfaces allowing no inflow and outflow of the air. In the heat exchanger 2, surfaces disposed in an outside air chamber 31a and a return air chamber 32a are the inflow surfaces, surfaces disposed in a supply air chamber 33a and an exhaust air chamber 34a are the outflow surfaces, and an upper surface and a bottom surface are the shielding surfaces.

The heat exchanger 2 is assembled such that: one of the long sides of the heat exchanger 2 in front view is in contact with a guide rail 5 installed on a top plate 3 forming the housing 1; another one of the long sides is in contact with a rib 20c formed in a protruding shape in a drain pan 20 (to be described later) installed on a bottom plate 4; and two ridges in the horizontal direction are in contact with guide rails 5a installed on partition walls 7 and 8 that partition the supply air path and the exhaust air path. This causes the inside of the housing 1 to be sectioned into the outside air chamber 31a, the return air chamber 32a, the supply air chamber 33a, and the exhaust air chamber 34a. The outside air chamber 31a is on the upstream side of the heat exchanger 2 in the supply air path. The return air chamber 32a is on the upstream side of the heat exchanger 2 in the exhaust air path. The supply air chamber 33a is on the downstream side of the heat exchanger 2 in the supply air path. The exhaust air chamber 34a is on the downstream side of the heat exchanger 2 in the exhaust air path. A supply air path filter 6a is installed in the outside air chamber 31a, and a return air path filter 6b is installed in the return air chamber 32a. The supply air path filter 6a and the return air path filter 6b suppress dust from entering the heat exchanger 2.

Since the heat exchanger 2 needs to be taken out at the time of maintenance, a gap is provided between a frame (not illustrated) of the heat exchanger 2 and the guide rails 5 and 5a, and the rib 20c. Therefore, it is desirable to introduce a device for preventing air leakage, such as sticking an elastic sealing material or a packing material (not illustrated) between the heat exchanger frame and the guide rails 5 and 5a, and the rib 20c.

Further, the heat exchange ventilator 10 includes the drain pan 20 that receives dew condensation water from the heat exchanger 2.

For the purpose of eliminating unevenness of air supply to the heat exchanger 2 as much as possible, the supply air blower 11 and the exhaust air blower 12 are both disposed on the downstream side of the heat exchanger. In the first embodiment, the supply air blower 11 is disposed in the supply air chamber 33a, and the exhaust air blower 12 is disposed in the exhaust air chamber 34a. However, the supply air blower 11 and the exhaust air blower 12 can generate an air flow regardless of arrangement on the upstream side or the downstream side of the heat exchanger 2.

"+" and "-" surrounded by squares in FIG. 1 indicate static pressure on the supply air path or the exhaust air path, in which "+" indicates a state where positive pressure is generated, and "-" indicates a state where negative pressure is generated. On a suction side of the supply air, negative pressure is generated in both the outside air chamber 31a and the outside air duct 71. On a suction side of the exhaust air, negative pressure is generated in both the return air chamber 32a and the return air duct 72. On a blowing side of the supply air, negative pressure is generated in the supply air chamber 33a, and positive pressure is generated in the air supply duct 73. On a blowing side of the exhaust air, negative pressure is generated in the exhaust air chamber 34a, and positive pressure is generated in the air exhaust duct 74. That is, negative pressure is generated in all of the outside air chamber 31a, the return air chamber 32a, the supply air chamber 33a, and the exhaust air chamber 34a. In this manner, by disposing both the supply air blower 11 and the exhaust air blower 12 on the downstream side of the heat exchanger 2, a static pressure difference around the heat exchanger 2 in the supply air path and the exhaust air path can be reduced, and an effect of reducing air leakage can be obtained.

The supply air path is provided in the housing 1 so as to connect each of the outdoor-side suction port 31 and the indoor-side blow-out port 33 to the heat exchanger 2. The exhaust air path is provided in the housing 1 so as to connect each of the indoor-side suction port 32 and the outdoor-side exhaust port 34 to the heat exchanger 2. As illustrated in FIG. 1, in the first embodiment, the supply air path and the exhaust air path, and the supply air blower 11 and the exhaust air blower 12 are disposed such that both the supply air flow and the exhaust air flow become air flows blown down from an upper side to a lower side in a direction of gravity with respect to the heat exchanger 2. That is, in the first embodiment, the supply air flow and the exhaust air flow pass through the heat exchanger 2 obliquely downward. By doing in this way, dew condensation water generated in the heat exchanger supply air path 2a and the heat exchanger exhaust air path 2b in a case where the heat exchanger 2 is a sensible heat exchanger is guided by the supply air flow or the exhaust air flow and naturally falls from the heat exchanger 2 to the drain pan 20.

Contrary to the heat exchange ventilator 10 according to the first embodiment illustrated in FIG. 1, in a case of a configuration in which the supply air flow and the exhaust air flow pass through the heat exchanger from the lower side to the upper side with respect to the direction of gravity, a flow direction of the supply air flow and the exhaust air flow and a flow direction of the dew condensation water are opposite to each other, so that the dew condensation water may remain in the heat exchanger. When the dew condensation water remains in the heat exchanger, the air path is blocked by the dew condensation water, a pressure loss of the heat exchanger locally rises, and the supply air flow and the exhaust air flow flowing to the heat exchanger become nonuniform. When the supply air flow and the exhaust air flow flowing in the heat exchanger become nonuniform, a heat exchange efficiency decreases and a heat recovery amount decreases.

Further, in a case where one of the supply air blower or the exhaust air blower is disposed on the upstream side of the heat exchanger and another one is disposed on the downstream side of the heat exchanger, in a pressure distribution around the heat exchanger, the side where the blower is disposed on the upstream side of the heat exchanger has positive pressure, and the side where the blower is disposed on the downstream side of the heat exchanger has negative pressure. Therefore, in a case where one of the supply air blower or the exhaust air blower is disposed on the upstream side of the heat exchanger and another one is disposed on the downstream side of the heat exchanger, strong positive pressure and strong negative pressure are adjacent to each other around the heat exchanger. Therefore, even if sizes of gaps are identical, in a case where one of the supply air blower or the exhaust air blower is disposed on the upstream side of the heat exchanger and another one is disposed on the downstream side, the amount of air leakage is increased as compared with a case where both are disposed on the downstream side of the heat exchanger. In a case where the supply air blower is disposed on the upstream side of the heat exchanger, the problem of air leakage in which the supply air flow mixes with the exhaust air flow does not occur, but a supply air amount decreases. Therefore, in a case were the supply air blower is disposed on the upstream side of the heat exchanger, power consumption for supplying an equal supply air amount will be more increased than a case where both the supply air blower and the exhaust air blower are disposed on the downstream side of the heat exchanger, which is undesirable.

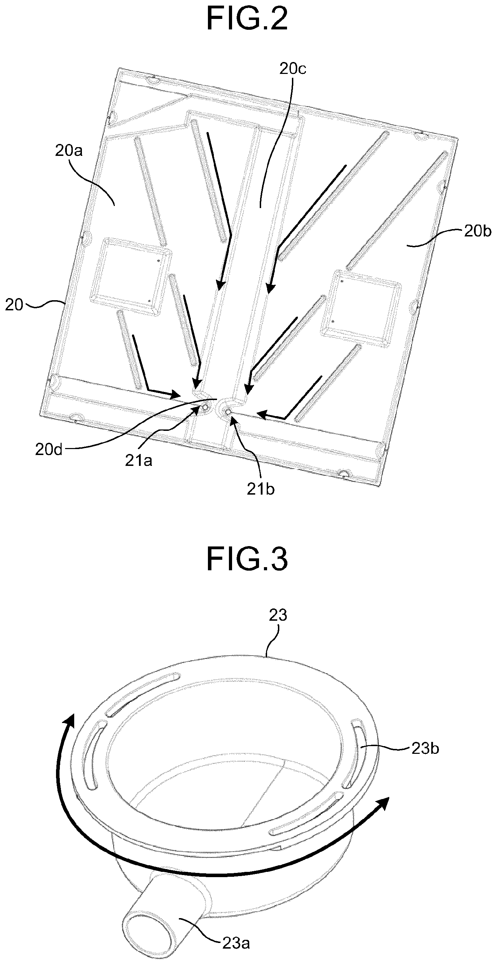

FIG. 2 is a perspective view of a drain pan of the heat exchange ventilator according to the first embodiment. The drain pan 20 is manufactured by a manufacturing method such as vacuum molding. The drain pan 20 includes a supply-air-side drain pan 20a provided on the blowing side of the supply air flow in the heat exchanger 2 and an exhaust-air-side drain pan 20b provided on the blowing side of the exhaust air flow in the heat exchanger 2. As illustrated in FIG. 1, the drain pan 20 is disposed so as to entirely cover the bottom plate 4 forming the housing 1. The drain pan 20 receives dew condensation water discharged from the heat exchanger 2 and dew condensation water generated in the supply air chamber 33a and the exhaust air chamber 34a.

As illustrated in FIG. 1, both the supply air chamber 33a in which the supply-air-side drain pan 20a is disposed and the exhaust air chamber 34a in which the exhaust-air-side drain pan 20b is disposed are portions where negative pressure is generated. Between the supply-air-side drain pan 20a and the exhaust-air-side drain pan 20b, the rib 20c that separates the supply air chamber 33a and the exhaust air chamber 34a is provided. Since the supply air chamber 33a and the exhaust air chamber 34a are partitioned by the rib 20c, air in the supply air chamber 33a and air in the exhaust air chamber 34a are not mixed in the individual air paths. Further, the rib 20c has a function as a rail that guides the heat exchanger 2. The supply-air-side drain pan 20a is provided with a supply-air-side drain discharge port 21a for drainage of dew condensation water. Further, the exhaust-air-side drain pan 20b is provided with an exhaust-air-side drain discharge port 21b for drainage of dew condensation water. Each of the supply-air-side drain pan 20a and the exhaust-air-side drain pan 20b is provided with a downward gradient descending toward the supply-air-side drain discharge port 21a and the exhaust-air-side drain discharge port 21b. Arrows in FIG. 2 indicate flows of dew condensation water on the drain pan 20. The dew condensation water received by the supply-air-side drain pan 20a gathers at the supply-air-side drain discharge port 21a, and the dew condensation water received by the exhaust-air-side drain pan 20b gathers at the exhaust-air-side drain discharge port 21b. The dew condensation water flowing out from the supply-air-side drain discharge port 21a and the exhaust-air-side drain discharge port 21b are received by a drain member 23.

FIG. 3 is a perspective view of a drain member of the heat exchange ventilator according to the first embodiment. As illustrated in FIG. 3, a drain member discharge port 23a, which is a pipe joint, is formed in the drain member 23. The drain member discharge port 23a is connected to a drain pipe 60. Further, bottom surfaces of the supply-air-side drain pan 20a and the exhaust-air-side drain pan 20b have a downward gradient toward the supply-air-side drain discharge port 21a and the exhaust-air-side drain discharge port 21b. Therefore, residual water is not generated in the drain pan 20, and clogging of a drain port due to generation of slime is less likely to occur.

Since dew condensation water from the heat exchanger is generated by cooling air having a high temperature, the dew condensation water is generated from the supply air flow in the summer season and from the exhaust air flow in the winter season. Therefore, it is originally necessary to apply a drain pan having a size capable of receiving the entire lower surfaces of the blow-out ports of the heat exchangers on the supply air side and the exhaust air side. In particular, in a case where the heat exchanger is a sensible heat exchanger, since dew condensation in the summer season cannot be ignored, drain pans are required on both the supply air side and the exhaust air side. The dew condensation water is generated not temporarily but continuously when air conditions are met. Therefore, when a treated air volume of the heat exchange ventilator is large, it is necessary to discharge the dew condensation water on the supply air side and the dew condensation water on the exhaust air side from the drain pan.

In a case where both the supply air blower and the exhaust air blower are disposed on the downstream side of the heat exchanger, as illustrated in FIG. 1, the supply air chamber 33a in which the supply-air-side drain pan 20a is installed and the exhaust air chamber 34a in which the exhaust-air-side drain pan 20b is installed have negative pressure. Therefore, air in the drain pipe 60 flows backward to the supply-air-side drain discharge port 21a and the exhaust-air-side drain discharge port 21b, and the dew condensation water is not discharged from the drain pan 20 due to the backflow of the air. The dew condensation water is kept retained without being drained from the drain pan 20, and the dew condensation water overflows from the drain pan 20 when a certain period of time elapses.

In the heat exchange ventilator 10 according to the first embodiment, a backflow prevention valve 22 is connected to the supply-air-side drain discharge port 21a and the exhaust-air-side drain discharge port 21b. The backflow prevention valve 22 is installed so as to be fitted into the supply-air-side drain discharge port 21a and the exhaust-air-side drain discharge port 21b. The backflow prevention valve 22 is supported by a support plate (not illustrated) or the like so as not to fall off.

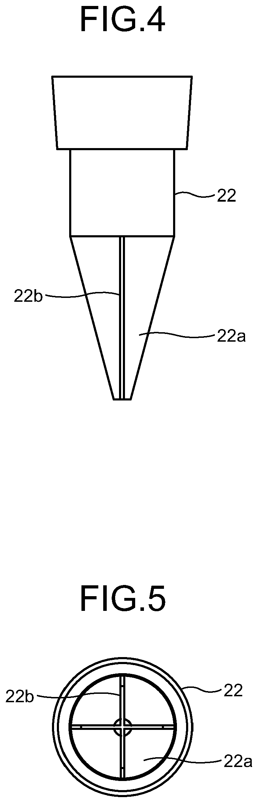

FIG. 4 is a side view of a backflow prevention valve of the heat exchange ventilator according to the first embodiment. FIG. 5 is a bottom view of the backflow prevention valve of the heat exchange ventilator according to the first embodiment. The backflow prevention valve 22 has a distal end portion 22a having a conical shape. The distal end portion 22a of the backflow prevention valve 22 has a slit 22b cut in a cross shape, and has a four-petal shape. When air in the drain pipe 60 flows backward due to negative pressure in a space where the supply-air-side drain discharge port 21a and the exhaust-air-side drain discharge port 21b are installed, the backflow can be prevented by closing the four petals in the structure. Therefore, the heat exchange ventilator according to the first embodiment can prevent exhaust air from flowing into the supply air path even under an air condition where dew condensation water is generated on the supply air side of the heat exchanger 2 and an air condition where dew condensation water is not generated in the heat exchanger 2. When dew condensation water accumulates at the distal end portion 22a of the backflow prevention valve 22, the dew condensation water is drained by the distal end portion 22a having the four-petal shape being opened by the weight of water in the structure, and it is possible to reliably discharge the dew condensation water even when the space where the supply-air-side drain discharge port 21a and the exhaust-air-side drain discharge port 21b are installed has negative pressure. Since the backflow prevention valve 22 requires flexibility, the backflow prevention valve 22 is made with a rubber material or the like.

The supply-air-side drain discharge port 21a and the exhaust-air-side drain discharge port 21b installed in the drain pan 20 are installed at positions accommodated in the bottom surface of the heat exchanger 2 having the hexagonal column shape. That is, the supply-air-side drain discharge port 21a and the exhaust-air-side drain discharge port 21b are covered from above by the bottom surface of the heat exchanger 2. By installing the supply-air-side drain discharge port 21a and the exhaust-air-side drain discharge port 21b at positions accommodated in the bottom surface of the heat exchanger 2, even if air flowing backward from the drain pipe 60 flows into the supply air chamber 33a and the exhaust air chamber 34a through the backflow prevention valve 22 installed at the supply-air-side drain discharge port 21a and the exhaust-air-side drain discharge port 21b, it is possible to prevent dew condensation water accumulated in the drain pan 20 from being scattered by the backflow air and to prevent the scattered dew condensation water from leaking to the outside of the housing 1.

Dew condensation water discharged from the backflow prevention valve 22 connected to the supply-air-side drain discharge port 21a and the exhaust-air-side drain discharge port 21b is received by the drain member 23, and is drained through one drain pipe 60 connected to the drain member discharge port 23a. Therefore, it is not necessary to install a drain pipe in each of the supply-air-side drain discharge port 21a and the exhaust-air-side drain discharge port 21b. Since the number of drain pipes 60 for drainage of dew condensation water generated from the heat exchanger 2 is reduced from 2 to 1, work time of a construction company can be reduced.

As illustrated in FIG. 2, a constricted portion 20d is provided in the rib 20c of the drain pan 20. The supply-air-side drain discharge port 21a and the exhaust-air-side drain discharge port 21b are formed at positions facing each other with the constricted portion 20d interposed in between. A size of the drain member 23 can be reduced by bringing the supply-air-side drain discharge port 21a and the exhaust-air-side drain discharge port 21b close to each other, so that an effect of facilitating attachment workability of the drain member 23 and reducing material cost of the drain member 23 is obtained. In addition, since the rib 20c is not interrupted even at a portion of the constricted portion 20d, partitioning of the supply air chamber 33a and the exhaust air chamber 34a is not obstructed by the rib 20c coming into contact with the heat exchanger 2, even when the constricted portion 20d is provided.

Further, in the drain member 23, a hole 23b has an elongated hole shape, through which a screw for fixing to the bottom plate 4 of the housing 1 passes. Therefore, in a plane parallel to the bottom plate 4 of the housing 1, the drain member 23 can be attached to the bottom plate 4 of the housing 1 in an orientation in which the drain member discharge port 23a is directed in any direction, and construction work of the drain pipe 60 by a construction company is facilitated.

In the heat exchange ventilator 10 according to the first embodiment, the supply-air-side drain discharge port 21a is provided in the supply-air-side drain pan 20a and the exhaust-air-side drain discharge port 21b is provided in the exhaust-air-side drain pan 20b. Therefore, dew condensation water generated in the supply air path and dew condensation water generated in the exhaust air path can be discharged separately. Further, in the heat exchange ventilator 10 according to the first embodiment, the backflow prevention valve 22 is installed at the supply-air-side drain discharge port 21a and the exhaust-air-side drain discharge port 21b. Therefore, it is possible to prevent backward air flow from the drain pipe 60 from flowing into the supply air chamber 33a and the exhaust air chamber 34a, and the dew condensation water can be reliably discharged. In addition, the exhaust air or the air in the drain pipe 60 is not mixed into the supply air, and fresh outside air can be supplied into the room. Therefore, the heat exchange ventilator 10 according to the first embodiment can perform sensible heat exchange ventilation without causing a problem such as overflow of dew condensation water even in a place where an odor is concerned. Therefore, the heat exchange ventilator 10 according to the first embodiment can supply air close to outside air to an indoor space to improve comfort of a user. Further, since the heat exchange ventilator 10 according to the first embodiment can perform energy saving ventilation by performing heat exchange, it is possible to reduce an air conditioning load of an air conditioner installed in a room as a supply destination of supply air, and energy saving can be promoted.

The configuration illustrated in the above embodiment illustrates one example of the contents and can be combined with another known technique, and it is also possible to omit and change a part of the configuration without departing from the subject matter.

### Reference Signs List

1 housing; 1a outdoor-side side surface; 1b indoor-side side surface; 2 heat exchanger; 2a heat exchanger supply air path; 2b heat exchanger exhaust air path; 3 top plate; 4 bottom plate; 5, 5a guide rail; 6a supply air path filter; 6b return air path filter; 7,8 partition wall; 10 heat exchange ventilator; 11 supply air blower; 12 exhaust air blower; 20 drain pan; 20a supply-air-side drain pan; 20b exhaust-air-side drain pan; 20c rib; 20d constricted portion; 21a supply-air-side drain discharge port; 21b exhaust-air-side drain discharge port; 22 backflow prevention valve; 22a distal end portion; 22b slit; 23 drain member; 23a drain member discharge port; 23b hole; 31 outdoor-side suction port; 31a outside air chamber; 32 indoor-side suction port; 32a return air chamber; 33 indoor-side blow-out port; 33a supply air chamber; 34 outdoor-side exhaust port; 34a exhaust air chamber; 60 drain pipe; 71 outside air duct; 72 return air duct; 73 air supply duct; 74 air exhaust duct.

## Claims

1. A heat exchange ventilator comprising:
a housing including a supply air path and an exhaust air path being independent of the supply air path;
a supply air blower adapted to generate a supply air flow in the supply air path, the supply air blower being installed in the supply air path;
an exhaust air blower adapted to generate an exhaust air flow in the exhaust air path, the exhaust air blower being installed in the exhaust air path;
a heat exchanger adapted to cause the supply air path and the exhaust air path to cross each other and cause heat exchange between the supply air flow and the exhaust air flow;
a supply-air-side drain pan installed downstream of the heat exchanger in the supply air path; and
an exhaust-air-side drain pan installed downstream of the heat exchanger in the exhaust air path, wherein
each of the supply-air-side drain pan and the exhaust-air-side drain pan includes a backflow prevention valve and a drain discharge port adapted to discharge dew condensation water generated in the housing to outside.

2. The heat exchange ventilator according to claim 1, wherein
the heat exchanger includes:
inflow surfaces into which air flows;
outflow surfaces from which air flows out; and
shielding surfaces connecting the inflow surfaces and the outflow surfaces and allowing no inflow and outflow of air, and each of the drain discharge ports is covered from above by the shielding surface.

3. The heat exchange ventilator according to claim 1, further comprising:
a separator adapted to separate a downstream side of the heat exchanger in the supply air path and a downstream side of the heat exchanger in the exhaust air path, wherein
the supply-air-side drain pan and the exhaust-air-side drain pan are connected by the separator, and the supply-air-side drain pan, the exhaust-air-side drain pan, and the separator are integrally formed.

4. The heat exchange ventilator according to claim 3, wherein
the separator has a rib shape provided with a constricted portion whose width is partially narrowed, and
the drain discharge port of the supply-air-side drain pan and the drain discharge port of the exhaust-air-side drain pan are formed at positions facing each other with the constricted portion interposed in between.

5. The heat exchange ventilator according to any one of claims 1 to 4, comprising:
a drain member adapted to receive dew condensation water generated in the housing, the drain member being installed on a bottom plate of the housing from below the drain discharge port of each of the supply-air-side drain pan and the exhaust-air-side drain pan, wherein
the drain member has a cup shape including a pipe joint to which a drain pipe is connected.

6. The heat exchange ventilator according to claim 5, wherein
the drain member is attachable to a bottom plate of the housing in an orientation in which the pipe joint is directed in any direction in a plane parallel to a bottom plate of the housing.
